(19)

Europäisches Patentamt

European Patent Office

Office européen des brevets

(11) **EP 3 340 447 A1**

(12) **EUROPEAN PATENT APPLICATION**

(43) Date of publication:
**27.06.2018   Bulletin 2018/26**

(21) Application number: **17208298.4**

(22) Date of filing: **19.12.2017**

(51) Int Cl.:
*H02M 1/12* (2006.01)        *H02M 3/158* (2006.01)
*H02J 3/38* (2006.01)        *H02M 7/5395* (2006.01)
*H02M 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **23.12.2016   US 201662438530 P
06.12.2017   US 201715833691**

(71) Applicant: **SunPower Corporation
San Jose, CA 95134 (US)**

(72) Inventor: **CHAPMAN, Patrick L.
San Jose, CA 95134 (US)**

(74) Representative: **Grünecker Patent- und
Rechtsanwälte
PartG mbB
Leopoldstraße 4
80802 München (DE)**

(54)   **FILTER COMPONENT REDUCTION**

(57)     Reduction as well as elimination of the use of discrete inductors or other filtering components for photovoltaic (PV) Module-Level Power Electronics (MLPE) is provided. This reduction may serve to promote two-dimensional circuit topology designs of MLPEs as well as promote efficiencies and reliability linked to diminished or eliminated inductor, or other filtering component(s), presence or use in MLPEs or related components or systems.

FIG. 1

## Description

CROSS-REFERENCE TO RELATED APPLICATIONS

This application clams the benefit of provisional application 62/438,530, which was filed on December 23, 2017 and is entitled "Module-Level Power Electronics Architecture to Minimize or Eliminate Filter Components." The '530 provisional application is incorporated by reference, in its entirety, into this application.

TECHNICAL FIELD

The present disclosure relates to the reduction of output filters used in electrical systems tailored to reconfigure constant or varying input voltages. More particularly, the present disclosure relates to the reduction or elimination of output filters, in electrical systems employing converter strings or inverter strings, through one or more of system inductance, system operation, and system topology.

BACKGROUND

Photovoltaic (PV) cells, commonly known as solar cells, are devices for conversion of solar radiation into electrical energy. Generally, solar radiation impinging on the surface of, and entering into, the substrate of a solar cell creates electron and hole pairs in the bulk of the substrate. The electron and hole pairs migrate to p-doped and n-doped regions in the substrate, thereby creating a voltage differential between the doped regions. The doped regions are connected to the conductive regions on the solar cell to direct an electrical current from the cell to an external circuit. When PV cells are combined in an array such as a PV module, the electrical energy collected from all of the PV cells can be combined in series and parallel arrangements to provide power with a certain voltage and current.

Module-level power electronics (MLPE) serve and support PV cells and PV systems. MLPEs may include microinverters and system supervisors or controllers. Microinverters provide certain features in these multi-part systems, particularly when used in an alternating current (AC) module. MLPE converters, such as a dc-dc optimizer, can conduct maximum power point tracking (MPPT) of individual PV modules as well as strings of PV cells. These MLPEs may include dc-dc optimizers that process 100% of the power being generated by a PV module and housekeeping circuits that provide power to various circuits of a PV module.

BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are not drawn to scale.

FIG. 1 depicts a typical dc-dc optimizer architecture, as may be employed in certain embodiments.
FIG. 2 depicts a canonical buck converter, as may be employed in certain embodiments.
FIG. 3 depicts an output filter arrangement of buck converters connected to a string inverter, as may be employed in certain embodiments.
FIG. 4 depicts buck converters lacking dedicated output filters and connected via home run wires to a string inverter, as may be employed in certain embodiments.
FIG. 5 depicts buck converters with an inductive input to the string inverter, as may be employed in certain embodiments.
FIG. 6 depicts a switching function for a first converter that oscillates from 0 to 40 at 100 kHz, as may be employed in certain embodiments.
FIG. 7 depicts gate voltages for four time-shifted switches of a buck converter, as may be employed in certain embodiments.
FIGs. 8a-8d depict gate voltages for each of four time-shifted switches of a buck converter as shown in FIG. 7, as may be employed in embodiments.
FIG. 9 depicts a cumulative voltage waveform arising from four time-shifted buck converters in series, as may be employed in certain embodiments.
FIG. 10 depicts time-shifted and non-time-shifted voltage waveforms, as may be employed in certain embodiments.

DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

Terminology. The following paragraphs provide definitions and/or context for terms found in this disclosure (including the appended claims):

"Comprising." This term is open-ended. As used in the appended claims, this term does not foreclose additional structure or steps.

"Configured To." Various units or components may be described or claimed as "configured to" perform a task or tasks. In such contexts, "configured to" is used to connote structure by indicating that the units/components include structure that performs those task or tasks during operation. As such, the unit/component can be said to be configured to perform the task even when the specified unit/component is not currently operational (e.g., is not on/active). Reciting that a unit/circuit/component is "configured to" perform one or more tasks is expressly intended not to invoke 35 U.S.C. §112, sixth paragraph, for that unit/component.

"First," "Second," etc. As used herein, these terms are used as labels for nouns that they precede, and do not imply any type of ordering (e.g., spatial, temporal, logical, etc.). For example, reference to a "first" motor drive does not necessarily imply that this motor drive is the first motor drive in a sequence; instead the term "first" is used to differentiate this motor drive from another motor drive (e.g., a "second" motor drive).

"Coupled" - The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically.

In addition, certain terminology may also be used in the following description for the purpose of reference only, and thus are not intended to be limiting. For example, terms such as "upper," "lower," "above," "below," "in front of," and "behind" refer to directions in the drawings to which reference is made. Terms such as "front," "back," "rear," "side," "outboard," "inboard," "leftward," and "rightward" describe the orientation and/or location of portions of a component, or describe the relative orientation and/or location between components, within a consistent but arbitrary frame of reference which is made clear by reference to the text and the associated drawings describing the component(s) under discussion. Such terminology may include the words specifically mentioned above, derivatives thereof, and words of similar import.

"Inhibit" - As used herein, inhibit is used to describe a reducing or minimizing effect. When a component or feature is described as inhibiting an action, motion, or condition it may completely prevent the result or outcome or future state completely. Additionally, "inhibit" can also refer to a reduction or lessening of the outcome, performance, and/or effect which might otherwise occur. Accordingly, when a component, element, or feature is referred to as inhibiting a result or state, it need not completely prevent or eliminate the result or state.

Embodiments may serve to reduce as well as eliminate the use of discrete inductors or other filtering components for photovoltaic (PV) Module-Level Power Electronics (MLPE). This reduction may serve to promote two-dimensional circuit topology designs of MLPEs as well as promote efficiencies and reliability linked to diminished or eliminated discrete inductors) or other filtering component(s) present or used in MLPEs or related components or systems.

When considering the topology of PV MPLEs, inductors often amount to some of the monetarily costliest, physically largest, and heaviest components of the MLPEs. In certain topologies, inductors can create reliability problems for an MLPE, particularly problems arising from solder joints, which wear out through the exposure to and interaction with potting compounds because solder joints can have large surface areas for the potting compounds to encapsulate or "grab" onto. Inductors may also serve to reduce or otherwise diminish efficiency ratings for an MLPE due to inherent loss mechanisms, one of which is core loss (inside the magnetic core of the inductor). These core losses may exist in a relatively constant amount regardless of the power production of the MLPE device, thereby inhibiting efficiencies across a broad operating range of an MLPE. Also, as an aspect of their large form factor, inductors naturally lend to a three-dimensional circuit board design, rather than a planar or approximately two-dimensional (2-D) design of circuit topology without discrete inductors. As such, inductors can add to the thickness of power converters, which makes them more difficult to integrate into relatively flat structures like solar panels or associated modules - either within a frame or a photovoltaic (PV) laminate of a PV module.

Dc-dc power optimizers are one of many different types of MLPEs. In embodiments "dc-dc optimizers" may comprise a dc-dc converter circuit topology and may provide maximum power point tracking (MPPT) on various different granular levels, often at the PV module level, but also possibly at the PV module substring or possibly at the PV cell level. These MPPT operations may also account for or be instructed by system level MPP consideration. Accordingly, while module-level topologies, as well as tracking features and operational methodologies, are described herein, it should be understood that the dc-dc optimizer concepts of these and other embodiments can be applied with various operational modes and across various PV component levels and including: string-level; cell-level; multi-system level; and other component or system levels as well.

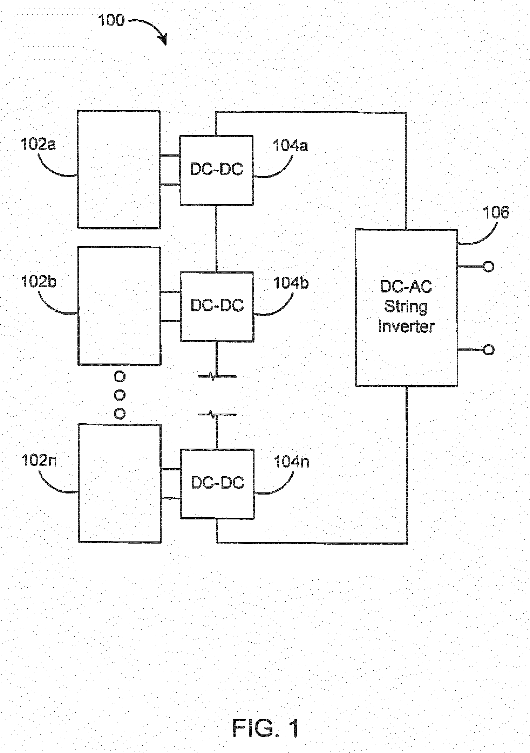

Figure 1 depicts a typical dc-dc optimizer architecture for a PV system 100. PV system 100 comprises a plurality of PV modules 102. Each PV module 102 is operatively connected to a dc-dc converter 104. The dc-dc converters 104 can be joined in series and connected to an inverter 106 (for example a string inverter, if operating on a single string of modules as shown in Figure 1).

Dc-dc converters can be characterized into one of three broad categories: 1) buck, 2) boost, or 3) buck-boost. Buck converters serve to reduce a module voltage from one dc level to another, where both voltage levels are generally seen as positive from a reference ground. A boost converter, comparatively, serves to increase input voltage to an output and a buck-boost converter can increase or decrease an input voltage often using a hybrid circuit topology from both the buck and boost designs. When Pulse Width Modulation is employed in a Buck converter, lower voltage dc or lower frequency ac voltage may be output.

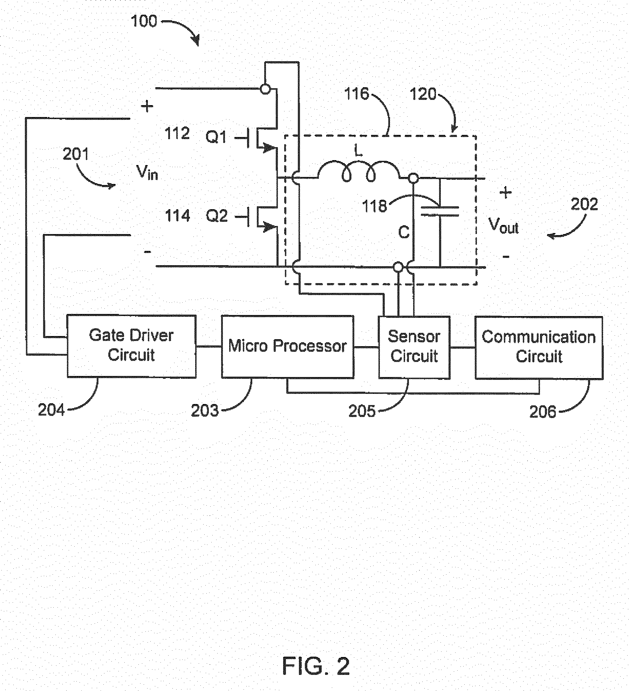

Buck converter topologies may include inductors in a switch output leg as a more efficient choice than the use of a resistor to inhibit current flow during switching cycles. An exemplary buck converter 110, in particular a canonical buck converter, is shown in Figure 2. As noted above, buck converters may serve as a dc-ac converter in certain operational modes.

As is visible in Figure 2, the buck converter 110 comprises two switches labelled 112 (Q1) and 114 (Q2) that may be coupled to a voltage source $V_{in}$ 201. The switches 112 and 114 can be provided as power metal-oxide-semiconductor field-effect transistors (MOSFETs) or other power switching devices. In the case of MOSFETs, an internal (body) diode exists but is not shown explicitly. As depicted in Figure 2, inductor 116 and capacitor 118 form an output filter 120. Switches 112, 114 are normally switched on and off in synchronized, alternating fashion, with the upper switch Q1 112, having a duty cycle D and frequency $f_{sw}$ and the lower switch, Q2 114, also having a frequency $f_{sw}$ but having a duty cycle of 1-$D$. The general circuit voltage is shown as positive above Q1 and negative below Q2. The gate drive circuit control lines are shown connected to gate driver circuit 204 and pointed towards switches Q1 and Q2. With assumptions of ideal components and a switching frequency high enough such that ripple effects can be neglected, the output voltage $V_{out}$ 202 is equal to $DV_{in}$. The efficiency is usually very high, ideally 100% with ideal components. In actual practice, efficiency of 98% is preferred to be readily achievable. In embodiments, the input voltage Vin 201 may be connected to a PV module and the output voltage $V_{out}$ 202 may be connected in series with other buck converter outputs (such as depicted in Figure 1).

A microprocessor 203, gate drive circuits 204, sensor circuitry 205, and communication module 206 are also shown in Figure 2. These components may be employed to make the buck converter circuit function or for other purposes as well, including those described herein. For example, the communication module 206 may employ communication circuits, such as power line carrier or wireless technology, to allow a buck converter of some embodiments to communicate with other converters, or a central gateway, or other components, controllers, or systems, which are not shown. Furthermore, the microprocessor 203 may serve to manage time shifting and other controls as described in this disclosure below. This control may be performed for operation of dc-dc converters, dc-ac inverters, network gateways, system managers, and for other purposes as well.

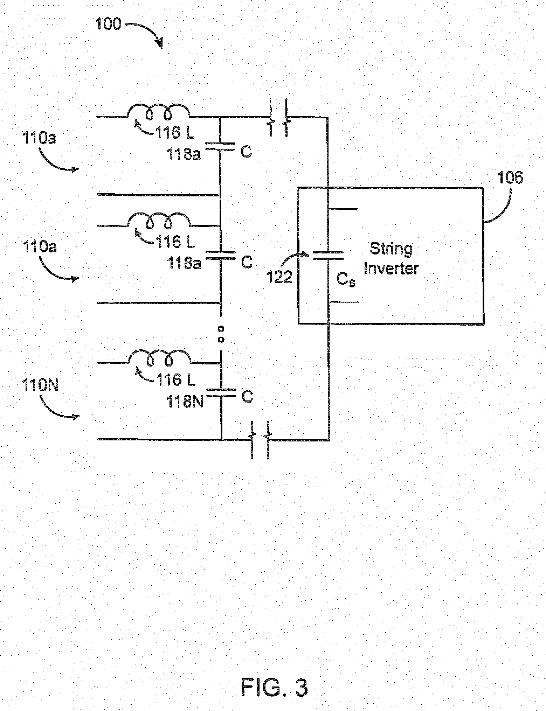

In some embodiments, an H-Bridge configuration of switches may be employed in converters rather than the pair of switches described above. Whether in an H-Bridge or a single pair configuration the switches of embodiments may be controlled such that periodic output voltages may be created and modified. For example, a buck converter of embodiments may be controlled using a Pulse Width Modulation (PWM) to intentionally introduce low-frequency AC waveforms, which can make a dc-dc converter behave as a dc-ac converter. This PWM waveform may be 60Hz, 50Hz, as well as other frequencies. In embodiments, the PWM waveform may also be modified such that the frequency is further modulated to meet an external line voltage or other external recipient. In other words, the PWM frequency can be monitored and adjusted for periods of time based upon external feedback. Still further, in some embodiments, downstream inverters may not be necessary should low frequency AC waveforms be introduced via a dc-dc converter. For example, the inverter 106 of FIG. 3 may be removed. However, the capacitor 122 as well as other filtering components downstream of the dc-dc inverter switches may still be retained as well as other filtering, monitoring, and control circuitry.

Buck converters in some embodiments may also employ input filters such as a capacitor having a small or nominal inductance that can serve to suppress current ripple from the input voltage source. It should also be understood that when a PV module is an input voltage source, the module itself can behave as an input filter because of its own inductance and capacitance. Thus, some embodiments may employ input filters and may also rely on input filtering provided by dc voltage sources.

Figure 3 depicts an output filter arrangement of buck converters 110 connected to a string inverter 106. Only primary filter components of output filters are shown in Figure 3 for simplicity. As explained above, the inductor L, may normally be the largest component and often the most monetarily expensive. When a plurality of buck converters 110 are connected in series, their capacitor outputs are connected in series. In addition, the string inverter 106 has a topology including its own input capacitor $C_s$ at 122, which may be substantial in capacitive value. Thus, the buck converter capacitors, C, may schematically appear in parallel with a string inverter capacitor, $C_s$, as is shown in Figure 3.

In some embodiments, one or more filter components, such as capacitors $118_a$-$118_N$ may be reduced in value or removed entirely. For one, in the topology shown in Figure 3, the capacitors C $118_a$-$118_N$ may be redundantly acting effectively in parallel with $C_s$. Furthermore, when Figure 3 is considered as a schematic for a typical PV system installation, the wires leading from the buck converters 110 to the string inverter 106 will generally be quite long (many meters to tens of meters in a typical rooftop installation, for example). As such, in these PV system installations, these long connecting wires will have internal self-inductance as well as loop inductance that can be factored in for purposes of filtering operations. For example, a twenty-meter-long wire, having a diameter of 2 mm, would have an internal self-inductance of approximately 39 microhenries ($\mu$H). That same wire, if in a rectangular loop of 10 meters x 1 meter, would have a loop inductance of approximately 30 $\mu$H. Therefore, for this example, a total inductance of about 70 $\mu$H is feasible. Many other possible arrangements are also possible using these order of magnitude estimates, which provides that inductances on the order of tens of microhenries or more, are feasible and may be employed in embodiments.

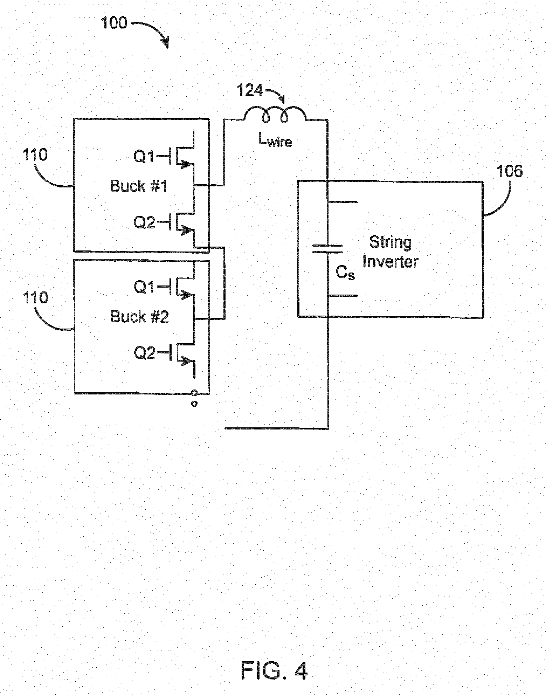

Some embodiments may be configured to take advantage of these wire length and loop inductances and in so doing can reduce or eliminate the capacitors from each buck converter 110. As can be seen in Figure 3 all of the inductors L 116 of the buck converters 110 appear in series. The cumulative inductance of these inductors 118 can, in turn, be simply lumped together and replaced with the wire inductance 124 of wires connecting the buck converters 110 to the string inverter 106 (these wires are often called the "home run" connections) as explicitly depicted in Figure 4. In particular, Figure 4 depicts buck converters 110, lacking dedicated output filters, connected via home run wires to string inverter 106. A number of buck converters 110, lacking their output inductors and capacitors (output filter, collectively), are connected in series. The wire inductance and inverter capacitance can form the effective output capacitor of the collective array of buck converters in embodiments. In this way, embodiments may be provided where there may be no inductors at all used by one or more buck converters in a PV system.

In some embodiments, buck converter inductance may be chosen to optimize performance. Indeed, when cost and performance are weighed and considered, the designed value inductance may be a consequence of the tradeoff. That said, a typical value of inductance in embodiments may be one that yields approximately 20% peak-to-peak current ripple for a given output current (usually rated current). Still further, in some embodiments, the inductance may be a consequence of the home run wires described above or as otherwise be used in a DC system.

In some embodiments, when all converters are switching together in phase with a duty cycle $D$, a collective output power $P_{out}$, collective output voltage to the inverter $V_{inv}$, then the switching frequency $f_{sw}$ required for the 20% ripple may be as follows:

$$f_{sw} = (1-D)(V_{inv})^2/0.2/L_{wire}/P_{out}.$$

Taking as an example a case with 4000 W of power, voltage of 400 V, duty cycle of 0.8, and wire in-

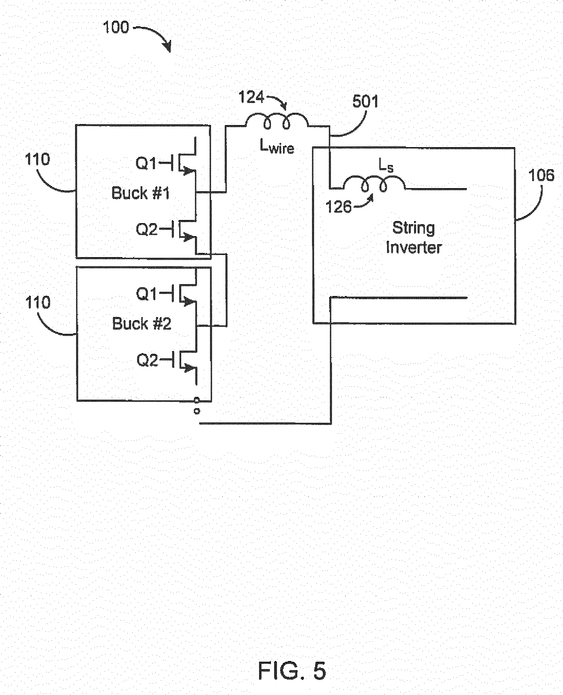

ductance of 100 $\mu$H, the preferred frequency is 400 kHz. While this is very reasonable frequency for modern buck converters, conditions may dictate a higher or lower switching frequency. For example, with this frequency appearing on long wires, it may be desirable to reduce the current ripple further to reduce losses and radiated emissions. In some embodiments, the current ripple may be further reduced by at least two other approaches. One approach may include adding some inductance $L_s$, via an inductor at 126 to the string inverter 106, in series with the string inverter input 501, as shown in Figure 5.

Figure 5 shows a similar configuration as Figure 4, but with an inductive input $L_s$ at 126 to the string inverter as mentioned above. In so doing, the string inverter inductance $L_s$ combines with the wire inductance $L_{wire}$ to provide a larger total inductance, thereby reducing current ripple and providing a minimum inductance for the circuit. Furthermore, in some cases, the string inverter 106 may be equipped with a "front end" stage, such as a boost converter, that inherently has an inductor present. In that case, it may be viable to make double use of that boost converter inductance, though this may be balanced against the need for the string inverter to meet its own emissions standards by having some capacitive filtering ahead of the boost stage in some embodiments.

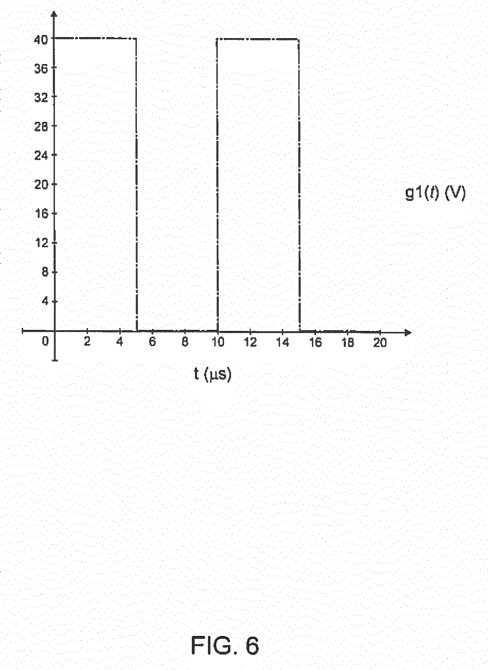

In some embodiments, the buck converters 110 may phase shift their switching signals such that their instantaneous output voltages are separated intentionally in time. Figure 6 depicts a switching function g1(t) (V) 701 for a first converter that oscillates from 0V to 40V at 5 microsecond intervals. If a first converter is switching at 5 kHz and 50% duty cycle, then its output would be a scaled version of Figure 6. Less than two full cycles are shown in Figure 6, which shows volts versus time in microseconds.

In embodiments, relative phase shifting between converters may vary. For example, rather than having an equal phase shift time period of "1/number of converters," some converters of a grouping may be phase shifted by a first time-period and a different grouping may be phase shifted by a second time-period. Other phase shifting may also be employed, where converters of a grouping do not all switch at the same time. This phase shifting may employ PWM as well as with other converter control methodologies.

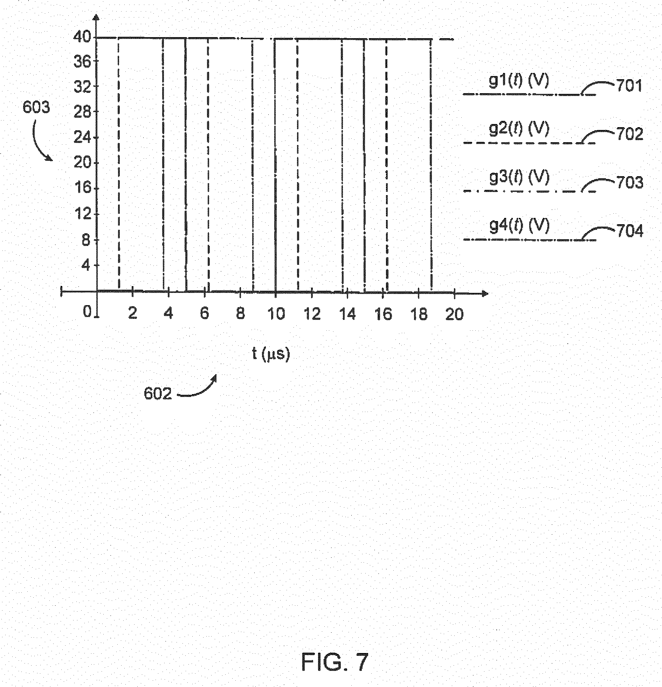

Other scaling and multiple gate signals may also be considered and employed in some embodiments. Multi-level converting techniques may be employed in embodiments. For example, as shown in Figure 7, scaling by a dc input voltage of, for example 40 V, and introducing three more switching functions g2(t)(V) 702, g3(t)(V) 703 and g4(t)(V) 704, with all four resulting signals each 1/8th of a cycle apart, a specific voltage 603 versus time 602 behavior may be created as depicted in Figure 7. Each voltage 603 in Figure 7 represents the voltage across the lower switch 114 (drain to source) of a given buck converter 110. Thus, Figure 7 depicts four shifted switching signals shown together, each 1/8th cycle apart and scaled for voltage. In this example, we consider only four converters but in a more robust system, there would likely be more, (e.g. 10-20) that could all be shifted by a proportion of a period (e.g., 1/20th of a period for 10 converters). Other converter numbers in these ranges (4, 10-20) may also be employed with the requisite time shift being preferably set at 1/number of converters in some embodiments.

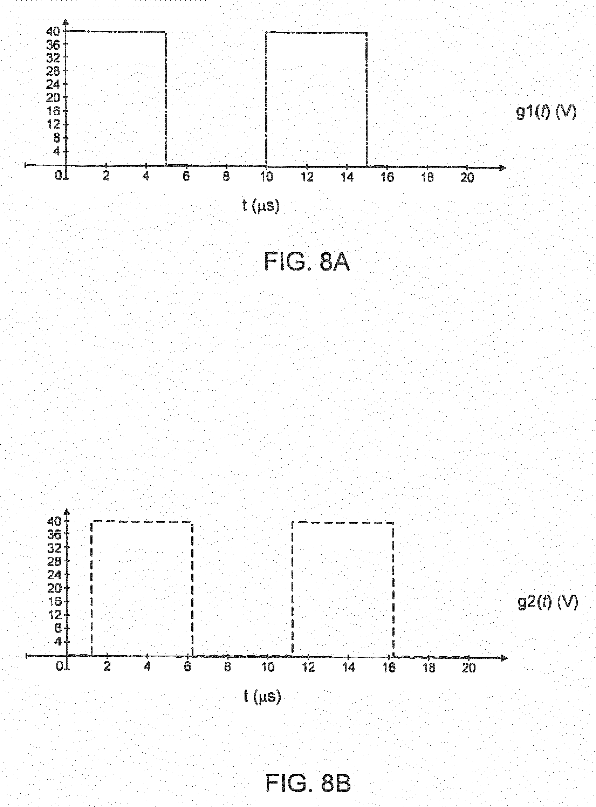

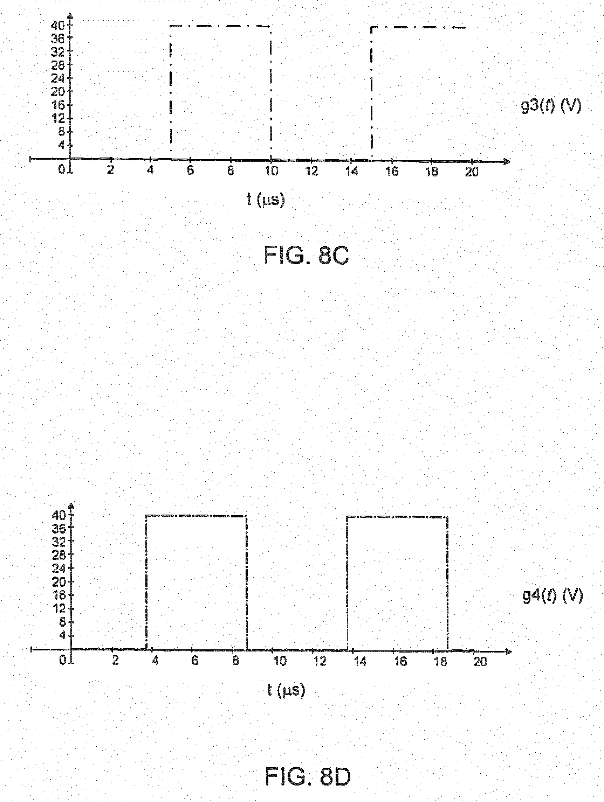

Figures 8a-8d show individual function diagrams for each of the four switching functions in Figure 7. As in Figure 7, in Figures 8a-8d the dc input voltage of, for example 40 V, is shown versus time and the functions are operating a specific period apart. Here an eight of a cycle. Switching functions g1(t)(V) 701, g2(t)(V) 702, g3(t)(V) 703 and g4(t)(V) 704, with all four resulting signals are shown, respectively, in Figures 8a-8d. As noted above, each voltage along axis 603 represents the voltage across the lower switch 114 (drain to source) of a given buck converter 110.

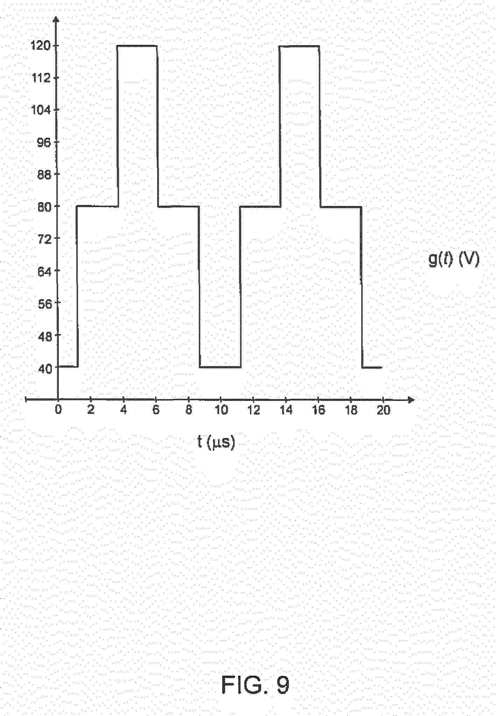

In some preferred embodiments, the sum of all the converter voltages will yield the total voltage of the converter array wherein the difference of this voltage and the inverter input voltage may be deemed to be the net applied voltage to the wire inductance. In the ideal case described above, with four converters having identical voltage, duty cycle, and a precise 1/8th cycle time shift, the total voltage waveform g(t) depicted in Figure 9 results. Figure 9 depicts a resulting total voltage waveform g(t) V arising from four time-shifted buck converters in series. A comparison of Figure 9 and Figure 6, wherein if all four converters have identical output waveforms (without any time shift), shows that a much high current ripple results. In both cases, the average voltage is 80 V. Supposing steady state so that the inverter input capacitor is charged to 80 V, the current ripple through the wire inductance may be determined as simply the integral of the total series buck converter waveform, minus 80 V, and divided by the inductance.

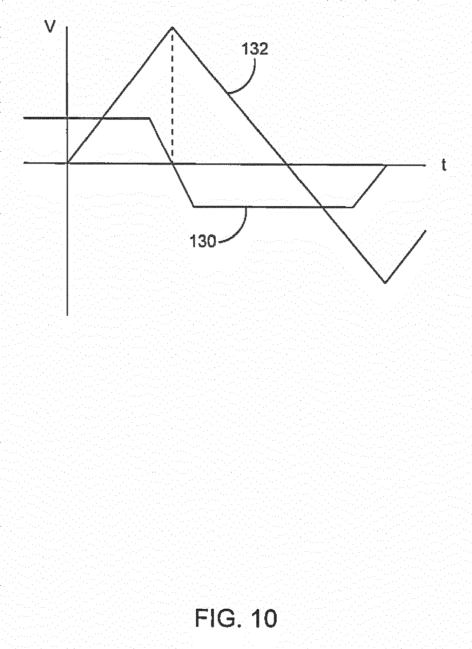

Analytically, in some embodiments, it may be determined that the peak-to-peak ripple of the time-shifted case (2 A) is ¼ that of the non-time-shifted case (0.5 A). Figure 10 illustrates time-shifted 130 and non-time-shifted 132 voltage waveforms for the above provided exemplary parameters. In real conditions, the voltage from each buck converter would not have the same magnitude and the duty cycle of each switch would not be the same. Nevertheless, the advantages of time shifting, however, may accrue to those more general topologies as well. This concept may be employed for "multi-phase" dc-dc converters, wherein multiple converters share common output filter elements. This may also be done with converters in parallel, rather than in series (as above), in "voltage regulator modules" (VRMs).

In some embodiments, in real conditions rather than ideal assumptions, it would be preferred if not necessary for each series converter to recognize what time shift to apply and relative to what starting point. In some embodiments, these reference data may be satisfied with a synchronization signal that may be received by all the converters. This reference signal may come from a centralized gateway, the string inverter itself, or other device that may periodically or continuously broadcast a synchronization signal. Other timing techniques may also be employed. Still further, in some embodiments, one of the buck converters may be designated as the "server" or "primary" for the synchronization signal, while the other "client" or "subsidiary" buck converters receive the synchronization signal from the primary.

A timing signal could be communicated via wireless (e.g. radio) transmissions or using power line carrier techniques over the "home run" wires themselves. In accordance with some codes or standards (e.g. the SunSpec standard for module-level rapid shutdown), a "heartbeat" signal is employed to propagate to all module-level devices. This heartbeat signal is periodic and may be used with or without modification to synchronize buck converters, as above.

The above paragraphs suggest methods to provide a synchronization signal to each buck converter. Still further, the buck converter signals may also be shifted in time relative to the synchronization signal in some embodiments. In an above example, with four buck converters, each signal is shifted by 1/8th of a cycle. However, the signals could be shifted by any desirable amount. For example, shifting each by 1/4th of a cycle could theoretically result in an exact cancellation in ripple. That is, the first and third converters would be half a cycle apart - perfectly out of phase - so the sum of their ripple would be zero. This is likewise true for the second and fourth converters. Indeed, some embodiments may take advantage of the premise that as long as the time shifts are such that there are always pairs that are exactly out of phase, the relative time shift between the pairs should be inconsequential. For any even number of converters having the same input voltage, some embodiments may seek to precisely cancel the voltage ripple (and therefore current ripple) from the sum of the buck converter outputs.

In operation, not each converter of some embodiments may have the same input voltage and, in general, each buck converter may very likely need to operate at a different duty cycle to achieve MPPT for each module. Voltage and duty cycle can vary continuously with weather conditions and therefore the ideal time shifts cannot be prescribed in advance. Therefore, applying fixed time shifts (as above) may be suitable as an approximation but may not truly minimize current ripple in some embodiments. Furthermore, the need to assign the time shifts in advance implies the system "knowing" which converters are in which string in order to correctly set the time shift for each buck converter. This knowledge of string / converter location may be imparted at PV system installation as well as relayed back to the system after startup through a communication circuit 206 or other communication circuit topology.

If using fixed time shifts, at least as a starting point, they may be assigned during a commissioning process. For instance, each buck converter may be identified by serial number and string assignment (if there is more than one string). Then, each buck converter in a given string is provided with a relative time shift (such as in increments T/N or whatever is deemed most appropriate, where N = number of converters and T = $1/f_{sw}$). These assignments would preferably take place in an automated fashion, such as via a gateway device, string inverter, or "server" converter providing electronic assignments to each converter via whatever communication means are available between the buck converters and the assigning device.

Once initial time shifts are assigned or other relative reference point, it is possible that the individual converters fine tune their shifts as conditions change. For example, a given buck converter could vary its time shift in small increments in response to changing current ripple. The converter, presumably equipped with a current sensor or other means of measuring current, may adjust its time shift according to changes in peak current ripple, for example, using any of a number of optimization methods (e.g., perturb and observe). Still further, in some embodiments, rather than focusing on current ripple, the converter may optimize its own conversion efficiency, or other performance metric, as well. This variance may be initiated and controlled by a primary converter as well as be managed by each converter or otherwise handled as a peer-to-peer adjustment in a converter or inverter.

In some embodiments, a string inverter (or other central device with access to the current) could measure current ripple and continuously reassign the time shifts based on its own optimization algorithm. This approach could be useful even in the case wherein the individual converters modify their own time shifts, as a central device would be able to monitor the overall performance and make "intervention" adjustments should there be an instability or significant divergence from an acceptable operating point.

As mentioned, these examples have been given in terms of a canonical buck converter, but a significant number of other topologies exist and may be used. In addition, while the context above was for dc-dc conversion, it is possible to use for dc-ac conversion as well. For example, each "buck converter" could be configured to have a duty cycle that varies as a sinusoid, to produce a significant ac component at a given frequency (e.g., 60 Hz). In that case, there would not be a string inverter, but potentially a different device that interfaces the system to the power grid, wherein additional filter components (like $L_s$ or $C_s$ above) could be housed, if needed.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown can include some or all of the features of the depicted embodiment. For example, elements can be omitted or combined as a unitary structure, and/or connections can be substituted. Further, where appropriate, aspects of any of the examples described above can be combined with aspects of any of the other examples described to form further examples having comparable or different properties and/or functions, and addressing the same or different problems. Similarly, it will be understood that the benefits and advantages described above can relate to one embodiment or can relate to several embodiments. For example, embodiments of the present methods and systems can be practiced and/or implemented using different structural configurations, materials, and/or control manufacturing steps. The claims are not intended to include, and should not be interpreted to include, means-plus- or step-plus-function limitations, unless such a limitation is explicitly recited in a given claim using the phrase(s) "means for" or "step for," respectively.

**Claims**

1. A photovoltaic (PV) system comprising:

   a plurality of PV modules;
   a plurality of dc-dc converters, each of the plurality of dc-dc converters operatively connected to at least one of the PV modules;
   a dc-ac inverter, each of the dc-dc converters operatively connected in series to the dc-ac inverter through an electrical conduit, the electrical conduit providing a first wire inductance to the PV system;
   wherein the dc-ac inverter comprises a capacitor providing a capacitance to the PV system; and,
   wherein the first wire inductance and the inverter capacitance operate as an output filter of the PV system.

2. The system of claim 1, wherein the dc-ac inverter further comprises an inductor providing a second inductance to the PV system.

3. The system of claim 1, wherein the dc-dc converter is a buck converter.

4. The system of claim 3, wherein the buck converter comprises a first and a second switch.

**5.** The system of claim 3, wherein the buck converter does not comprise an output filter.

**6.** The system of claim 3, wherein the buck converter does not comprise an output inductor.

**7.** The system of claim 3, wherein the buck converter does not comprise an output capacitor.

**8.** A method of operating a photovoltaic (PV) system, the PV system comprising:

a plurality of PV modules;
a plurality of dc-dc converters, each of the plurality of dc-dc converters operatively connected to at least one of the PV modules of the plurality of PV modules;
a dc-ac inverter, each of the dc-dc converters operatively connected in series to the dc-ac inverter through an electrical conduit, the electrical conduit providing a first wire inductance to the PV system;
wherein the dc-ac inverter comprises a capacitor providing a capacitance to the PV system; and,
wherein the first wire inductance and the inverter capacitance operate as an output filter of the PV system,
the method comprising:

providing a synchronization signal to each of the dc-dc converters; and
phase-shifting the output voltages of each of the dc-dc converters based on the synchronization signal.

**9.** The method of claim 8 wherein the plurality of dc-dc converters totals N in number and wherein the output voltages of the each of the dc-dc converters are phase-shifted by a cycle length times the inverse of one-half of N.

**10.** The method of claim 8 further comprising:

phase-shifting the output voltages of two or more of the dc-dc converters by a multiplier, the multiplier serving to cancel ripple in an output of one or more of the dc-dc converters,

**11.** The method of claim 8 further comprising:

using a first duty cycle to control switches in a first dc-dc converter of the plurality of dc-dc converters; and
using a second duty cycle to control switches in a second dc-dc converter of the plurality of dc-dc converters;
wherein the first duty cycle is different than the second duty cycle,

**12.** The method of claim 8 further comprising:

during a commissioning of converters of the plurality of dc-dc converters, assigning a relative time shift to each of the converters of the plurality, the time shift serving to stager relative switch firing times of converters of the plurality of dc-dc converters.

**13.** The method of claim 12 wherein a value indicating the relative time shift to be assigned is received at the PV system from an external communication network.

**14.** The method of claim 8 further comprising:

assigning a relative time shift to each of the converters of the plurality, the time shift serving to stager relative switch firing times of converters of the plurality of dc-dc converters.

FIG. 1

FIG. 2

FIG. 3

FIG. 4

FIG. 5

FIG. 6

FIG. 7

FIG. 8A

FIG. 8B

FIG. 8C

FIG. 8D

FIG. 9

FIG. 10

Europäisches
Patentamt

European
Patent Office

Office européen
des brevets

# EUROPEAN SEARCH REPORT

Application Number

EP 17 20 8298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 372 862 A2 (GEN ELECTRIC [US]) 5 October 2011 (2011-10-05) | 1-7 | INV. H02M1/12 |
| Y | * paragraphs [0014], [0019]; figures 3-6 * | 8-14 | H02M3/158 H02J3/38 H02M7/5395 |
| Y | US 2015/130284 A1 (LEDENEV ANATOLI [US]) 14 May 2015 (2015-05-14) | 8-14 | H02M1/00 |
| A | * paragraphs [0029], [0033]; figures 1, 2a, 2b, 9a, 9b * | 1-7 | |
| A | DE 10 2011 003778 A1 (BOSCH GMBH ROBERT [DE]) 9 August 2012 (2012-08-09) * paragraph [0035]; figure 1 * | 1-14 | |
| A | JP 2014 042410 A (TOYOTA MOTOR CORP) 6 March 2014 (2014-03-06) * figure 3 * | 1-14 | |
| A | CN 104 702 104 A (SPREADTRUM COMM SHANGHAI CO) 10 June 2015 (2015-06-10) * abstract; figures 2,3 * | 1-14 | |

TECHNICAL FIELDS
SEARCHED (IPC)

H02M
H02J

The present search report has been drawn up for all claims

| Place of search | Date of completion of the search | Examiner |
|---|---|---|
| The Hague | 20 April 2018 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 8298

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2018

| Patent document cited in search report | | Publication date | Patent family member(s) | | Publication date |
|---|---|---|---|---|---|
| EP 2372862 | A2 | 05-10-2011 | AU | 2011201307 A1 | 20-10-2011 |
| | | | CN | 102208883 A | 05-10-2011 |
| | | | EP | 2372862 A2 | 05-10-2011 |
| | | | US | 2011241433 A1 | 06-10-2011 |
| US 2015130284 | A1 | 14-05-2015 | US | 2015130284 A1 | 14-05-2015 |
| | | | US | 2016329720 A1 | 10-11-2016 |
| DE 102011003778 | A1 | 09-08-2012 | DE | 102011003778 A1 | 09-08-2012 |
| | | | WO | 2012107128 A2 | 16-08-2012 |
| JP 2014042410 | A | 06-03-2014 | NONE | | |
| CN 104702104 | A | 10-06-2015 | NONE | | |

EPO FORM P0459

For more details about this annex : see Official Journal of the European Patent Office, No. 12/82

**REFERENCES CITED IN THE DESCRIPTION**

**Patent documents cited in the description**

- WO 62438530 A